# FASCICULE DE BREVET EUROPEEN

(11) **EP 3 205 543 B1**
(45) Date de publication et mention de la délivrance du brevet: **26.06.2019**
(21) Numéro de dépôt: 17155401.7
(22) Date de dépôt: 09.02.2017
(51) Int. Cl.: B61C 9/38, B61F 5/50, H02K 9/10

(54) **BOGIE MOTEUR A REFROIDISSEMENT AMELIORE**
GLÜHKERZE MIT VERBESSERTER ABKÜHLUNG
DRIVING BOGIE WITH IMPROVED COOLING

(30) Priorité: 09.02.2016 FR 1651019
(43) Date de publication de la demande: 16.08.2017
(73) Titulaire: ALSTOM Transport Technologies, 93400 Saint-Ouen (FR)
(72) Inventeur: BOUALEM, Benali, 25660 SAONE (FR); RANDRIA, Andry-Mamy, 25000 BESANCON (FR); RAGUIN, Bruno, 25290 ORNANS (FR)
(74) Mandataire: Lavoix

(56) Documents cités:
- DE-A1-102012 220 659
- US-A1- 2008 030 086

## Description

La présente invention concerne un bogie comportant un châssis, deux essieux, et au moins un premier moteur d'entrainement du premier essieu comportant une carcasse, un rotor et un stator.

L'invention concerne également un véhicule ferroviaire équipé d'au moins un tel bogie.

En fonctionnement, le premier moteur dégage de la chaleur par effet joule dans les bobinages et par frottements. Ceci occasionne une élévation de la température moyenne du moteur à l'intérieur de la carcasse.

Pour limiter l'ampleur de ce phénomène, il est connu d'utiliser un ventilateur externe monté sur l'arbre du moteur afin de réaliser une convection forcée autour de la carcasse. En outre, certains moteurs de bogie incluent un échangeur de chaleur fixé sur la carcasse adapté pour dissiper la chaleur contenue dans l'air interne de la carcasse vers l'atmosphère extérieur.

Le document US-A-2008/030086 décrit un bogie conforme au préambule de la revendication 1.

Les solutions précitées ont une efficacité donnée, qui peut s'avérer insuffisante dans certains cadres. Selon les circonstances, il peut se produire une élévation de la température interne du moteur avec des conséquences négatives, comme des pannes ou une réduction de la durée de vie du bogie.

Un but de l'invention est de fournir un bogie résolvant tout ou partie des inconvénients ci-dessus, c'est-à-dire en particulier un bogie présentant un risque de panne réduit et/ou une durée de vie augmentée.

A cet effet, l'invention a pour objet un bogie selon la revendication 1.

Selon des modes particuliers de réalisation, le bogie comprend l'une ou plusieurs des caractéristiques correspondant aux revendications 2 à 10.

L'invention a également pour objet un véhicule ferroviaire comprenant au moins un bogie tel que décrit ci-dessus.

L'invention sera mieux comprise à la lecture de la description qui va suivre, donnée uniquement à titre d'exemple et faite en se référant aux dessins annexés sur lesquels :
- la figure 1 est une vue de dessus schématique d'un bogie selon un premier mode de réalisation de l'invention,
- la figure 2 est une vue schématique en coupe selon un plan vertical du bogie représenté sur la figure 1, et
- la figure 3 est une vue schématique de dessus d'un bogie selon un deuxième mode de réalisation de l'invention.

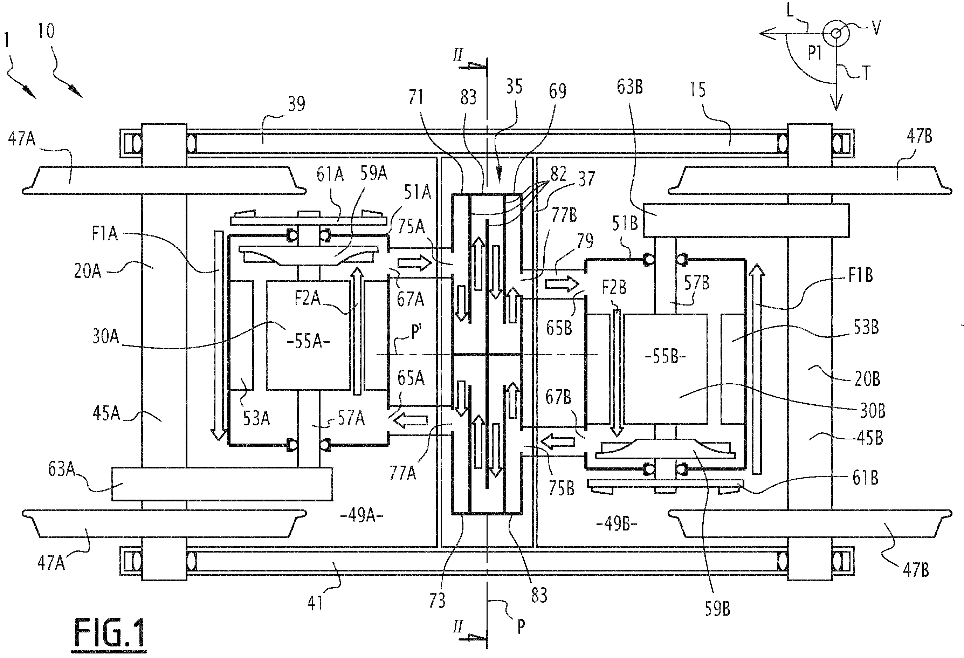

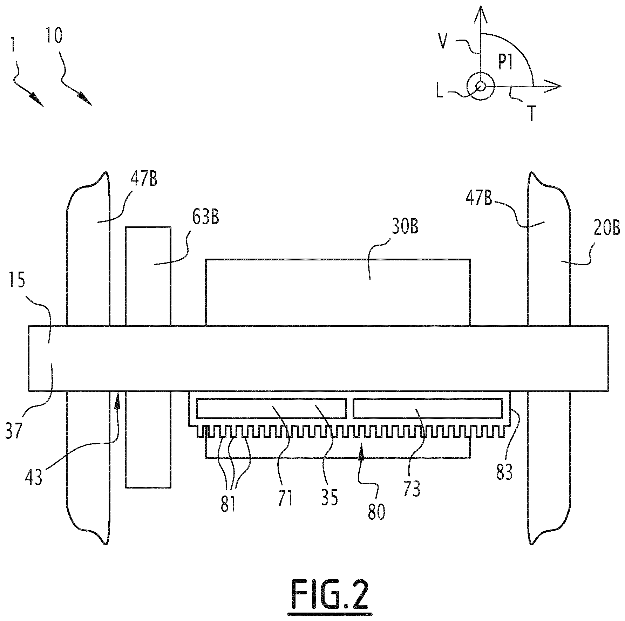

En référence aux figures 1 et 2, on décrit un véhicule ferroviaire 1 comportant au moins un bogie 10 selon un premier mode de réalisation de l'invention.

Le véhicule ferroviaire 1 n'est pas représenté en détail. Il s'agit par exemple d'une rame de train à grande vitesse inter-cité, ou d'un train suburbain ou urbain.

Le véhicule ferroviaire 1 est adapté pour circuler selon une direction longitudinale L, par exemple horizontale. On définit également une direction transversale T sensiblement perpendiculaire à la direction longitudinale L et une direction d'élévation V sensiblement perpendiculaire à la direction longitudinale et la direction transversale. La direction d'élévation V est verticale lorsque le bogie 10 circule sur une voie horizontale (non représentée).

Le bogie 10 comprend un châssis 15, un premier essieu 20A, un deuxième essieu 20B, un premier moteur 30A d'entraînement du premier essieu, et un deuxième moteur 30B d'entraînement du deuxième essieu. Le bogie 10 comprend aussi un échangeur de chaleur 35 fixé à une traverse 37 du châssis 15.

Le châssis 15 représenté est schématique. Le châssis 15 comprend deux longerons 39, 41 transversalement opposés.

La traverse 37 est fixée sur les longerons 39, 41. La traverse 37 est par exemple sensiblement parallèle à la direction transversale T et avantageusement située longitudinalement à égale distance du premier essieu 20A et du deuxième essieu 20B. La traverse 37 présente par exemple une forme prismatique à génératrice transversale, avantageusement à section rectangulaire perpendiculairement à la direction transversale T. La traverse 37 comporte avantageusement une face inférieure 43 contre laquelle l'échangeur de chaleur 35 est fixé.

Dans l'exemple représenté, le deuxième essieu 20B est symétrique du premier essieu 20A par rapport à un plan médian P perpendiculaire à la direction longitudinale L. Aussi, seul le premier essieu 20A sera décrit ci-après. Les éléments analogues du deuxième essieu 20B portent les mêmes références numériques suivies de la lettre « B ».

Le premier essieu 20A comprend un arbre 45A monté respectivement sur les extrémités longitudinales des longerons 39, 41, et deux roues 47A fixées sur l'arbre 45A.

Le premier essieu 20A, les longerons 39, 41, la traverse 37 et l'échangeur de chaleur 35 définissent un premier espace 39A en vue de dessus, dans lequel est logé le premier moteur 30A.

Les roues 47A sont situées transversalement entre le premier moteur 30A et, respectivement, les longerons 39, 41.

Le deuxième moteur 30B se déduit sur la figure 1 du premier moteur 30A par une rotation de 180°, aussi, il ne sera pas décrit en détail ci-après. Seules les différences seront décrites. Les éléments analogues du deuxième moteur 30B portent les mêmes références numériques suivies de la lettre « B ».

Le premier moteur 30A comprend une carcasse 51A, un stator 53A, un rotor 55A, un arbre 57A solidaire du rotor, un ventilateur interne 59A et un ventilateur externe 61A. Le premier moteur 30A comprend aussi un réducteur 63A connecté mécaniquement à l'arbre 57A et à l'arbre 45A du premier essieu 20A.

Le réducteur 63A est situé transversalement entre la carcasse 51A et l'une des roues 47A, tandis que le réducteur 63B du deuxième moteur 30B est transversalement situé entre la carcasse 51B et la roue 40B transversalement opposée à la roue 47A précitée.

Ainsi, le premier moteur 30A et le deuxième moteur 30B sont situés longitudinalement de part et d'autre de la traverse 37 et avantageusement orientés tête-bêche.

L'arbre 57A est par exemple sensiblement parallèle à la direction transversale T. A une extrémité transversalement opposée au réducteur 63A, l'arbre 57A porte le ventilateur externe 61A.

Le ventilateur externe 61A est adapté pour créer un flux d'air F1A lorsque l'arbre 57A tourne.

Le flux d'air F1A est orienté principalement selon la direction transversale T et est situé contre la carcasse 51A.

La carcasse 51A comporte une entrée d'air 65A et une sortie d'air 67A.

La sortie d'air 67A est située transversalement au niveau du ventilateur interne 59A, qui est dans l'exemple représenté de type centrifuge.

Le ventilateur interne 59A est adapté pour créer un flux d'air F2A entre le stator 53A et le rotor 55A et à diriger cet air vers la sortie d'air 67A.

L'échangeur de chaleur 35 est une pièce rapportée fixée à la traverse 37, avantageusement en dessous de celle-ci, selon la direction d'élévation V. L'échangeur de chaleur 35 est par exemple en aluminium ou en alliage.

L'échangeur de chaleur 35 comprend un corps 69 constitué de deux demi-corps 71, 73 avantageusement contigus transversalement.

L'échangeur de chaleur 35 comporte aussi avantageusement une surface inférieure 80 munie d'ailettes 81 adaptées pour dissiper la chaleur en provenance des flux d'air traversant l'échangeur de chaleur.

Le corps 69 comprend une première entrée d'air 75A connectée fluidiquement à la sortie d'air 67A du premier moteur 30A, une deuxième entrée d'air 75B connectée fluidiquement à la sortie d'air 67B du deuxième moteur 30B, une première sortie d'air 77A connectée fluidiquement à l'entrée d'air 65A, et une deuxième sortie d'air 77B connectée fluidiquement à l'entrée d'air 65B.

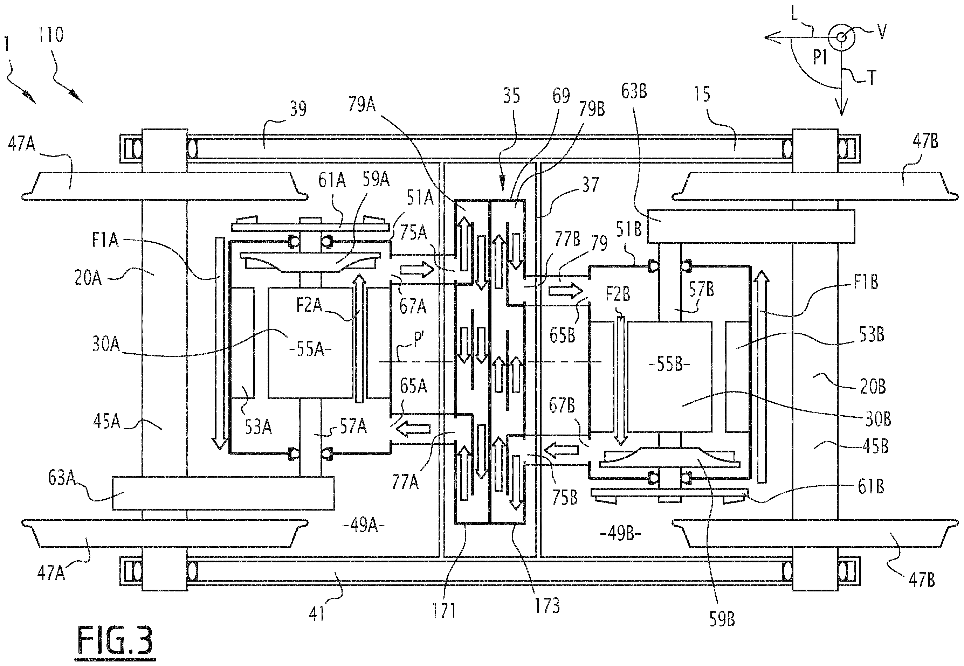

Comme visible sur les figures 1 et 3, le corps 69 de l'échangeur de chaleur 35 est situé à l'intérieur de la traverse 37 en projection orthogonale sur un plan P1 défini par la direction longitudinale L et par la direction transversale T.

Lesdites connexions fluidiques sont par exemple formées par des canalisations, par exemple orientées sensiblement longitudinalement.

L'échangeur de chaleur 35 et les carcasses 51A, 51B définissent un circuit d'air 79 de refroidissement du premier moteur 30A et du deuxième moteur 30B.

Les deux demi-corps 71, 73 sont symétriques l'un de l'autre, à l'exception des entrées et sorties d'air, par rapport à un plan médian P' perpendiculaire à la direction transversale T. Chaque demi-corps 71, 73 comporte des parois internes 82 et des parois externes 83 adaptées pour recevoir de la chaleur et la dissiper dans l'atmosphère extérieure.

Les parois internes 82 sont par exemple des plaques perpendiculaires à la direction longitudinale L qui définissent un passage en zigzag depuis la première entrée d'air 75A jusqu'à la deuxième sortie d'air 77B d'une part, et de la deuxième entrée d'air 75B jusqu'à la première sortie d'air 77A d'autre part.

Selon une variante non représentée, les deux demi-corps 71, 73 ne sont pas contigus et forment deux échangeurs séparés, par exemple par un espace selon la direction transversale T.

Selon une autre variante (non représentée), les deux demi-corps 71, 73 ne sont pas contigus, mais sont imbriqués l'un dans l'autre, tout en définissant respectivement deux passages d'air séparés l'un de l'autre dans le circuit d'air 79.

Le fonctionnement du bogie 10 se déduit de sa structure et va être décrit brièvement ci-après.

Lorsque les arbres 57A, 57B du premier moteur 30A et du deuxième moteur 30B tournent, les ventilateurs externes 61A, 61B produisent les flux d'air externes F1A, F1B qui refroidissent les carcasses 51A, 51B.

En outre, les ventilateurs internes 59A, 59B mettent en mouvement l'air contenu dans le circuit d'air 79.

Le ventilateur interne 59A créé un appel d'air créant le flux d'air interne F2A entre le stator 53A et le rotor 55A. Le flux d'air interne F2A est expulsé par la sortie d'air 67A et entre dans l'échangeur de chaleur 35 par la première entrée d'air 75A.

Cet air chaud en provenance du premier moteur 30a parcourt le demi-corps 71 jusqu'à la deuxième sortie d'air 77B en cédant sa chaleur aux parois 82, 83 de ce demi-corps. La chaleur captée par les parois du demi-corps 71 est évacuée vers l'atmosphère extérieure, en particulier par les ailettes 81 situées en dessous de l'échangeur de chaleur 35.

L'air ainsi refroidi entre ensuite dans le deuxième moteur 30B par l'entrée d'air 65B. Le ventilateur 59B fait passer l'air entre le stator 53B et le rotor 55B sous la forme du flux F2B. Ce flux est expulsé par la sortie d'air 67B et entre dans l'échangeur de chaleur 35 par la deuxième entrée d'air 75B.

Cet air chaud parcourt le demi-corps 73 jusqu'à la première sortie d'air 77A. en cédant de la chaleur aux parois 82, 83 de ce demi-corps.

Ensuite, l'air refroidi sort par la sortie d'air 77A et entre dans le premier moteur 30A par l'entrée d'air 65A et les étapes décrites ci-dessus se reproduisent cycliquement.

Grâce aux caractéristiques décrites ci-dessus, les moteurs 30A, 30B bénéficient d'une grande surface d'échange thermique. La température à l'intérieur des carcasses 51A et 51B est plus proche de la température de l'atmosphère ambiante que dans les moteurs de l'art antérieur. Le risque de panne est réduit, et la durée de vie du bogie 10 est améliorée.

En référence à la figure 3, on va maintenant décrire un bogie 110 selon un deuxième mode de réalisation de l'invention. Le bogie 110 est analogue au bogie 10 représenté sur la figure 1 et 2. Les éléments similaires du bogie 10 portent les mêmes références numériques que ceux du bogie 10. Seules les différences seront décrites en détail ci-après.

Le bogie 110 diffère du bogie 10 par la structure de l'échangeur 35. En effet, l'échangeur de chaleur 35 du bogie 110 définit avec la carcasse 51A un circuit d'air 79A de refroidissement du premier moteur 30A, et avec la carcasse 51B un circuit d'air 79B de refroidissement du deuxième moteur 30B.

Les circuits d'air 79A et 79B sont fludidiquement séparés, c'est-à-dire que l'air contenu dans le circuit d'air 79A ne se mélange pas avec l'air contenu dans le circuit d'air 79B.

L'échangeur de chaleur 35 comprend deux demi-corps 171, 173 contigus longitudinalement.

Le demi-corps 171 définit une portion du circuit d'air 79A allant de la première entrée d'air 75A à la première sortie d'air 77A.

Le demi-corps 173 définit une portion du circuit d'air 79B allant de la deuxième entrée d'air 75B jusqu'à la deuxième sortie d'air 77B.

Selon une première variante (non représentée), les deux demi-corps 171, 173 ne sont pas contigus mais séparés longitudinalement par un espace.

Selon une deuxième variante (non représentée), les deux demi-corps 171, 173 ne sont pas contigus, mais imbriqués l'un dans l'autre.

Le fonctionnement du bogie 110 est analogue à celui du bogie 10, si ce n'est que l'air qui entre par la première entrée d'air 75A ne sort pas par la deuxième sortie d'air 77B, mais par la première sortie d'air 77A pour retourner dans le premier moteur 30A.

De même, l'air qui entre par la deuxième entrée d'air 75B ne sort pas par la première sortie d'air 77A, mais par la deuxième sortie d'air 77B pour retourner dans le deuxième moteur 30B.

## Revendications

1. Bogie (10 ; 110) adapté pour circuler selon une direction longitudinale (L), comportant :
- un châssis (15) comportant au moins une traverse (37) s'étendant selon une direction transversale (T) sensiblement perpendiculaire à la direction longitudinale (L),
- un premier essieu (20A) et un deuxième essieu (20B), et
- au moins un premier moteur (30A) d'entraînement du premier essieu (20A), le premier moteur (30A) comportant une carcasse (51A), un rotor (55A), un stator (53A) et au moins un ventilateur interne (59A) situé à l'intérieur de la carcasse (51A),
**caractérisé en ce que** le bogie (10 ; 110) comprend en outre un échangeur de chaleur (35) formant une pièce rapportée fixée à la traverse (37), la traverse (37) supportant au moins 80% du poids de l'échangeur de chaleur (35), l'échangeur de chaleur (35) comportant au moins une première entrée d'air (75A) connectée à une sortie d'air (67A) de la carcasse (51A), et au moins une première sortie d'air (77A) connectée à une entrée d'air (65A) de la carcasse (51A),
l'échangeur de chaleur (35) et la carcasse (51A) définissant un circuit d'air (79A) de refroidissement du premier moteur (30A), l'échangeur de chaleur (35) comportant des parois (82, 83) destinées à recevoir de la chaleur véhiculée par l'air en provenance du premier moteur (30A) et à dissiper cette chaleur dans l'atmosphère.

2. Bogie (10 ; 110) selon la revendication 1, dans lequel le premier moteur (30A) comprend un arbre (57A) entraîné par le rotor (55A), et un ventilateur externe (61A) actionné par l'arbre (57A) pour produire un flux d'air externe (F1A) adapté pour refroidir la carcasse (51A).

3. Bogie (10 ; 110) selon la revendication 1 ou 2, dans lequel l'échangeur de chaleur (35) est situé en dessous de la traverse (37) lorsque le bogie (10 ; 110) se situe sur une voie de circulation.

4. Bogie (10 ; 110) selon l'une quelconque des revendications 1 à 3, dans lequel une paroi inférieure (80) de l'échangeur de chaleur (35) comporte des ailettes (81).

5. Bogie (10 ; 110) selon l'une quelconque des revendications 1 à 3, dans lequel l'échangeur de chaleur (35) comporte un corps (69) situé à l'intérieur de la traverse (37) en projection orthogonale sur un plan (P1) défini par la direction longitudinale (L) et par la direction transversale (T).

6. Bogie (10 ; 110) selon l'une quelconque des revendications 1 à 5, dans lequel la traverse (37) a une forme prismatique selon la direction transversale (T), de préférence à section rectangulaire.

7. Bogie (10 ; 110) selon l'une quelconque des revendications 1 à 6, dans lequel le premier moteur (30A) est logé longitudinalement entre un arbre (45A) du premier essieu (20A) et l'échangeur de chaleur (35).

8. Bogie (10 ; 110) selon l'une quelconque des revendications 1 à 6, comportant en outre un deuxième moteur (30B) d'entraînement du deuxième essieu (20B),
le deuxième moteur (30B) comportant une carcasse (51B), un rotor (55B), un stator (53B) et au moins un ventilateur interne (59B) situé à l'intérieur de la carcasse (51B), l'échangeur de chaleur (35) comportant au moins une deuxième entrée d'air (75B) connectée à une sortie d'air (67B) de la carcasse (51B) du deuxième moteur (30B), et au moins une deuxième sortie d'air (77B) connectée à une entrée d'air (65B) de la carcasse (51B) du deuxième moteur (30B),
l'échangeur de chaleur (35) et la carcasse (51B) du deuxième moteur (30B) définissant un circuit d'air (79B) de refroidissement du deuxième moteur (30B).

9. Bogie (10) selon la revendication 8, dans lequel le circuit d'air (79A) de refroidissement du premier moteur (30A) et le circuit d'air (79B) de refroidissement du deuxième moteur (30B) sont un même circuit, l'air de refroidissement étant destiné à passer du premier moteur (30A) dans l'échangeur de chaleur (35), puis dans le deuxième moteur (30B), puis à nouveau dans l'échangeur de chaleur (35), et enfin à revenir dans le premier moteur (30A).

10. Bogie (110) selon la revendication 8, dans lequel le circuit d'air (79A) de refroidissement du premier moteur (30A) et le circuit d'air (79B) de refroidissement du deuxième moteur (30B) sont fluidiquement séparés.

11. Véhicule ferroviaire (1) comprenant au moins un bogie (10 ; 110) selon l'une quelconque des revendications 1 à 10.

## Patentansprüche

1. Drehgestell (10; 110), welches dazu eingerichtet ist, entlang einer Längsrichtung (L) zu fahren, aufweisend:
- ein Chassis (15), welches mindestens einen Querträger (37), welcher sich entlang einer Querrichtung (T), die im Wesentlichen senkrecht zur Längsrichtung (L) ist, erstreckt,
- einen ersten Radsatz (20A) und einen zweiten Radsatz (20B), und
- mindestens einen ersten Motor (30A) zum Antreiben des ersten Radsatzes (20A), wobei der erste Motor (30A) ein Gehäuse (51A), einen Rotor (55A), einen Stator (53A) und mindestens einen internen Lüfter (59A), welcher innerhalb des Gehäuses (51A) angeordnet ist, aufweist,
**gekennzeichnet dadurch, dass** das Drehgestell (10; 110) ferner einen Wärmetauscher (35), welcher ein Einsetzteil, das an dem Querträger (37) befestigt ist, bildet, wobei der Querträger (37) mindestens 80% des Gewichts des Wärmetauschers (35) abstützt, aufweist, wobei der Wärmetauscher (35; 135) mindestens einen ersten Lufteinlass (75A), welcher mit einem Luftauslass (67A) des Gehäuses (51A) verbunden ist, und mindestens einen ersten Luftauslass (77A), welcher mit einem Lufteinlass (65A) des Gehäuses (51A) verbunden ist, aufweist,
wobei der Wärmetauscher (35; 135) und das Gehäuse (51A) einen Luftkreislauf (79A) zur Kühlung des ersten Motors (30A) definieren, wobei der Wärmetauscher (35; 135) Wände (82, 83) aufweist, welche dazu bestimmt sind, die Wärme, welche durch die Luft von dem ersten Motor (30A) übertragen wird, zu erhalten und diese Wärme in die Umgebung abzuführen.

2. Drehgestell (10; 110) gemäß dem Anspruch 1, wobei der erste Motor (30A) eine Welle (57A), welche durch den Rotor (55A) angetrieben wird, und einen externen Lüfter (61A), welcher durch die Welle (57A) betrieben wird, um einen externen Luftstrom (F1A), der dazu geeignet ist, das Gehäuse (51A) zu kühlen, zu erzeugen, aufweist.

3. Drehgestell (10; 110) gemäß dem Anspruch 1 oder 2, wobei der Wärmetauscher (35) unterhalb des Querträgers (37) angeordnet ist, wenn sich das Fahrgestell (10) auf einem Fahrgleis befindet.

4. Drehgestell (10) gemäß irgendeinem der Ansprüche 1 bis 3, wobei eine untere Wand (80) des Wärmetauschers (35) Rippen (81) aufweist.

5. Drehgestell (10) gemäß irgendeinem der Ansprüche 1 bis 3, wobei der Wärmetauscher (35) einen Körper (69), welcher bei einer orthogonalen Projektion auf eine Ebene, welche durch die Längsrichtung (L) und durch die Querrichtung (T) definiert ist, innerhalb des Querträgers (37) angeordnet ist, aufweist.

6. Drehgestell (10; 110) gemäß irgendeinem der Ansprüche 1 bis 5, wobei der Querträger (37) eine prismatische Form entlang der Querrichtung (T), bevorzugt mit rechteckigem Querschnitt, hat.

7. Drehgestell (10; 110) gemäß irgendeinem der Ansprüche 1 bis 6, wobei der erste Motor (30A) längs zwischen einer Welle (45A) des ersten Radsatzes (20A) und dem Wärmetauscher (35; 135) untergebracht ist.

8. Drehgestell (10; 110) gemäß irgendeinem der Ansprüche 1 bis 6, ferner aufweisend einen zweiten Motor (30B) zum Antreiben des zweiten Radsatzes (20B),
wobei der zweite Motor (30B) ein Gehäuse (51B), einen Rotor (55B), einen Stator (53B), und mindestens einen internen Lüfter (59B), welcher innerhalb des Gehäuses (51B) angeordnet ist, aufweist, wobei der Wärmetauscher (35; 135) mindestens einen zweiten Lufteinlass (75B), welcher mit einem Luftauslass (67B) des Gehäuses (51B) des zweiten Motors (30B) verbunden ist, und mindestens einen zweiten Luftauslass (77B), welcher mit einem Lufteinlass (65B) des Gehäuses (51B) des zweiten Motors (30B) verbunden ist, aufweist,
wobei der Wärmetauscher (35) und das Gehäuse (51B) des zweiten Motors (30B) einen Luftkreislauf (79B) zum Kühlen des zweiten Motors (30B) definieren.

9. Drehgestell (10) gemäß dem Anspruch 8, wobei der Luftkreislauf (79A) zur Kühlung des ersten Motors (30A) und der Luftkreislauf (79B) zum Kühlen des zweiten Motors (30B) ein gleicher Kreislauf sind, wobei die Kühlluft dazu bestimmt ist, von dem ersten Motor (30A) in den Wärmetauscher (35), dann in den zweiten Motor (30B), dann erneut in den Wärmetauscher (35) und schließlich zurück in den ersten Motor (30A) zu strömen.

10. Drehgestell (110) gemäß dem Anspruch 8, wobei der Luftkreislauf (79A) zur Kühlung des ersten Motors (30A) und der Luftkreislauf (79B) zum Kühlen des zweiten Motors (30B) voneinander fluidisch getrennt sind.

11. Schienenfahrzeug (1), aufweisend mindestens ein Drehgestell (10; 110) gemäß irgendeinem der Ansprüche 1 bis 10.

## Claims

1. Bogie (10; 110) adapted to travel in a longitudinal direction (L), comprising:
- a chassis (15) having at least one cross-member (37) extending in a transverse direction (T) substantially perpendicular to the longitudinal direction (L),
- a first axle (20A) and a second axle (20B), and
- at least a first motor (30A) for driving the first axle (20A), the first motor (30A) having a housing (51A), a rotor (55A), a stator (53A), and at least one internal fan (59A) situated inside the housing (51A),
**characterised in that** the bogie (10; 110) further comprises a heat exchanger (35) forming a separate part fixed to the cross-member (37), the cross-member (37) bearing at least 80% of the weight of the heat exchanger (35), the heat exchanger (35) having at least a first air inlet (75A) connected to an air outlet (67A) of the housing (51A), and at least a first air outlet (77A) connected to an air inlet (65A) of the housing (51A),
the heat exchanger (35) and the housing (51A) defining an air circuit (79A) for cooling the first motor (30A), the heat exchanger (35) having walls (82, 83) which are to receive heat carried by the air coming from the first motor (30A) and to dissipate that heat into the atmosphere.

2. Bogie (10; 110) according to claim 1, wherein the first motor (30A) comprises a shaft (57A) driven by the rotor (55A), and an external fan (61A) actuated by the shaft (57A) in order to produce an external air flow (F1A) adapted to cool the housing (51A).

3. Bogie (10; 110) according to claim 1 or 2, wherein the heat exchanger (35) is situated beneath the cross-member (37) when the bogie (10; 110) is situated on a track.

4. Bogie (10; 110) according to any one of claims 1 to 3, wherein a bottom wall (80) of the heat exchanger (35) has fins (81).

5. Bogie (10; 110) according to any one of claims 1 to 3, wherein the heat exchanger (35) comprises a body (69) situated inside the cross-member (37) in orthogonal projection on a plane (P1) defined by the longitudinal direction (L) and by the transverse direction (T).

6. Bogie (10; 110) according to any one of claims 1 to 5, wherein the cross-member (37) has a prismatic shape in the transverse direction (T), of preferably rectangular cross-section.

7. Bogie (10; 110) according to any one of claims 1 to 6, wherein the first motor (30A) is housed longitudinally between a shaft (45A) of the first axle (20A) and the heat exchanger (35).

8. Bogie (10; 110) according to any one of claims 1 to 6, further having a second motor (30B) for driving the second axle (20B),
the second motor (30B) having a housing (51B), a rotor (55B), a stator (53B), and at least one internal fan (59B) situated inside the housing (51B), the heat exchanger (35) having at least a second air inlet (75B) connected to an air outlet (67B) of the housing (51B) of the second motor (30B), and at least a second air outlet (77B) connected to an air inlet (65B) of the housing (51B) of the second motor (30B),
the heat exchanger (35) and the housing (51B) of the second motor (30B) defining an air circuit (79B) for cooling the second motor (30B).

9. Bogie (10) according to claim 8, wherein the air circuit (79A) for cooling the first motor (30A) and the air circuit (79B) for cooling the second motor (30B) are the same circuit, the cooling air being intended to pass from the first motor (30A) into the heat exchanger (35), then into the second motor (30B), then into the heat exchanger (35) again, and finally to return to the first motor (30A).

10. Bogie (110) according to claim 8, wherein the air circuit (79A) for cooling the first motor (30A) and the air circuit (79B) for cooling the second motor (30B) are fluidically separate.

11. Railway vehicle (1) comprising at least one bogie (10; 110) according to any one of claims 1 to 10.
